(19) 

Europäisches
Patentamt

European
Patent Office

Office européen
des brevets

(11) **EP 4 491 654 A1**

(12) **EUROPEAN PATENT APPLICATION**
published in accordance with Art. 153(4) EPC

(43) Date of publication:
**15.01.2025  Bulletin 2025/03**

(21) Application number: **23766968.4**

(22) Date of filing: **10.03.2023**

(51) International Patent Classification (IPC):
*C08G 64/42* (2006.01)      *B32B 27/36* (2006.01)
*C08G 63/668* (2006.01)      *C08G 63/91* (2006.01)

(52) Cooperative Patent Classification (CPC):
**B32B 27/36; C08G 63/668; C08G 63/91;
C08G 64/42**

(86) International application number:
**PCT/JP2023/009272**

(87) International publication number:
**WO 2023/171792 (14.09.2023 Gazette 2023/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.03.2022  JP 2022038261
21.06.2022  JP 2022099720**

(71) Applicant: **MCPP Innovation LLC
Tokyo 100-8251 (JP)**

(72) Inventors:
• **KUROSE, Shohei
Tokyo 100-8251 (JP)**
• **HIGUCHI, Akimitsu
Tokyo 100-8251 (JP)**

(74) Representative: **Hoffmann Eitle
Patent- und Rechtsanwälte PartmbB
Arabellastraße 30
81925 München (DE)**

(54) **MODIFIED POLYESTER-BASED ELASTOMER AND METHOD FOR PRODUCING SAME**

(57)    A modified polyester-based elastomer obtained by modifying a polyester polyether block copolymer consisting of a hard segment containing an aromatic polyester and a soft segment containing a polyalkylene ether glycol with an unsaturated carboxylic acid and/or a derivative thereof, wherein the modified polyester-based elastomer contains titanium and has a titanium content of less than 250 wt ppm.

**EP 4 491 654 A1**

**Description**

Technical Field

The present invention relates to a modified polyester-based elastomer having excellent color tone and heat-resistant adhesion property, and a method for producing the same.

The present invention also relates to a laminated body, a modifier, and a polar polymer composition using this modified polyester-based elastomer.

Background Art

Laminated bodies containing gas barrier materials, such as polyamides and ethylene-vinyl alcohol-based copolymers, are used in containers such as films, bottles, and cups in a food packaging field due to their excellent mechanical properties, safety in food applications, and gas barrier properties such as water vapor and oxygen. In a non-food field, they are also widely used in industrial piping and hoses, tubes for transporting beverages, medicines, automobile parts, and the like. Furthermore, a technique for laminating gas barrier materials with ester-based polymers to impart functions such as aroma preservation, rigidity, heat resistance, cold resistance, surface printability, and the like is well known.

Polyamides and ethylene-vinyl alcohol-based copolymers have poor adhesiveness to ester-based polymers. For this reason, a technique is known in which an adhesive layer made of an adhesive polymer composition is provided to laminate them.

For example, Patent Literature 1 describes an adhesive polymer composition consisting of a modified polyester-based elastomer obtained by modifying a saturated polyester-based thermoplastic elastomer having a polyalkylene ether glycol segment content of 58 to 73 % by mass with an unsaturated carboxylic acid or a derivative thereof in the presence of a radical generator.

Polar polymers such as polyamide and ethylene-vinyl alcohol-based copolymers used as gas barrier materials have poor flexibility and are particularly poor in impact resistance. To solve this problem, attempts have been made to impart moderate flexibility and impact resistance while retaining high gas barrier properties, for example by adding a modified polyester elastomer to the polar polymer.

(Patent Literature 2)

Citation List

Patent Literatures

Patent Literature 1: JP 2002-155135 A
Patent Literature 2: JP 2004-2791 A

Summary of Invention

Technical Problem

In the food packaging field, where good color tone and transparency are often required, adhesive polymer compositions having excellent color tone are desired so that the appearance and internal visibility of the laminate are not impaired due to the color tone of the adhesive polymer composition or discoloration due to heat during molding.

In non-food fields such as industrial piping, automobile parts, and the like, an adhesive layer used in applications exposed to high temperature environments may decompose and deteriorate due to heat, whereby peeling may occur at the interface between the adhesive layer and a gas barrier layer which is a polyamide or ethylene-vinyl alcohol-based copolymer layer. For this reason, an adhesive polymer composition in which such decomposition and deterioration due to heat is suppressed has been desired.

For these reasons, an adhesive polymer composition having excellent color tone and heat-resistant adhesion property has been desired.

However, the adhesive polymer composition described in Patent Literature 1 has excellent initial adhesion, but there is room for improvement in heat-resistant adhesion property, as shown in Comparative Example 1-1 below. This adhesive polymer composition also has poor color tone.

Furthermore, according to the present inventors' study, the modified polyester-based elastomer described in Patent Literature 2 has excellent modification effect, i.e., softening performance of polar polymers, but there is room for improvement in color, as shown in Comparative Examples 1-2 and 1-3 below.

Patent Literatures 1 and 2 lack description about the titanium content of the modified polyester-based elastomer. However, at the time of filing an application of Patent Literatures 1 and 2, for the production of modified polyester-based elastomers, only polyester-based thermoplastic elastomers produced on an industrial scale using a titanium catalyst were used as polyester-based thermoplastic elastomers to be modified. For this reason, the titanium content of the polyester-based thermoplastic elastomers to be modified was 250 wt ppm or more, equivalent to Comparative Examples 1-1 to 1-3 below. Therefore, the titanium content of the modified polyester-based elastomer obtained by modifying such a polyester-based thermoplastic elastomer is 250 wt ppm or more.

An object of the present invention is to provide a modified polyester-based elastomer having excellent color tone and heat-resistant adhesion property, a method for producing the same, and a laminate using the modified polyester-based elastomer.

A further object of the present invention is to provide a modifier and a polar polymer composition containing the modified polyester-based elastomer.

Solution to Problem

As a result of extensive investigations to solve the above problems, the present inventors discovered that by setting the titanium content of the modified polyester-based elastomer to a predetermined value or less, a modified polyester-based elastomer having excellent color tone and heat-resistant adhesion property can be obtained, and that this modified polyester-based elastomer is effective as a modifier for polar polymers such as ethylene-vinyl alcohol-based copolymers and polyamide-based polymers, and arrived at the present invention.

The gist of the present invention is as follows.

[1] A modified polyester-based elastomer obtained by modifying a polyester polyether block copolymer consisting of a hard segment containing an aromatic polyester and a soft segment containing a polyalkylene ether glycol with an unsaturated carboxylic acid and/or a derivative thereof,
wherein the modified polyester-based elastomer contains titanium and has a titanium content of less than 250 wt ppm.

[2] The modified polyester-based elastomer according to [1], wherein a content of the polyalkylene ether glycol segment in the polyester polyether block copolymer is 5 to 90 % by mass.

[3] The modified polyester-based elastomer according to [1] or [2], wherein an MFR (according to JIS K7210, 230°C, 2.16 kg load) of the modified polyester-based elastomer is 1 to 300 g/10 min.

[4] The modified polyester-based elastomer according to any one of [1] to [3], wherein a density (according to JIS K7112) of the modified polyester-based elastomer is 1.00 to 1.35 g/cm$^3$.

[5] The modified polyester-based elastomer according to any one of [1] to [4], wherein a melting point of the modified polyester-based elastomer is 145 to 245°C.

[6] The modified polyester-based elastomer according to any one of [1] to [5], wherein a JIS-D hardness (according to JIS K6253) of the modified polyester-based elastomer is 10 to 80.

[7] The modified polyester-based elastomer according to any one of [1] to [6], wherein the titanium content of the modified polyester-based elastomer is 20 wt ppm or more.

[8] The modified polyester-based elastomer according to [7], wherein the titanium content of the modified polyester-based elastomer is 20 wt ppm or more and 248 wt ppm or less.

[9] A laminated body comprising: a base layer; a layer made of the modified polyester-based elastomer according to any one of [1] to [8] or an adhesive polymer composition containing the modified polyester-based elastomer; and a resin layer.

[10] A method for producing a modified polyester-based elastomer comprising a step of modifying a polyester-based elastomer polymerized in the presence of a titanium compound with an unsaturated carboxylic acid and/or a derivative thereof,

wherein the polyester-based elastomer is a polyester polyether block copolymer consisting of a hard segment containing an aromatic polyester and a soft segment containing a polyalkylene ether glycol, and

a titanium content in the polyester-based elastomer is less than 250 wt ppm.

[11] The method for producing a modified polyester-based elastomer according to [10], wherein a content of the polyalkylene ether glycol segment in the polyester polyether block copolymer is 5 to 90 % by mass.

[12] The method for producing a modified polyester-based elastomer according to [10] or [11], wherein an acid value of the polyester-based elastomer is 32 eq/T or less.

[13] The method for producing a modified polyester-based elastomer according to any one of [10] to [12], wherein the modification is carried out in the presence of a radical generator.

[14] The method for producing a modified polyester-based elastomer according to [13], wherein a blending ratio of the radical generator is 0.001 to 5 parts by mass based on 100 parts by mass of the polyester-based elastomer.

[15] The method for producing a modified polyester-based elastomer according to any one of [10] to [14], wherein the modification is carried out by a melt-kneading reaction.

[16] A modifier comprising the modified polyester-based elastomer according to any one of [1] to [8].

[17] A polar polymer composition comprising a polar polymer and the modified polyester-based elastomer according to [1] or [2], wherein a content of the polar polymer is 70 to 99 % by mass, and the modified polyester-based elastomer is 1 to 30 % by mass based on a total of the polar polymer and the modified polyester-based elastomer, and the polar polymer comprises at least one selected from an ethylene-vinyl alcohol-based copolymer and a polyamide-based polymer.

Advantageous Effects of Invention

The modified polyester-based elastomer of the present invention has excellent color tone and heat-resistant adhesion property. Therefore, by using this modified polyester-based elastomer in an adhesive layer between an ester-based polymer layer and a gas barrier layer, a laminate having excellent color tone and transparency can be provided in the food packaging field. In addition, in non-food fields such as industrial piping, automobile parts, and the like, a laminate having excellent heat-resistant adhesion property and no problem of interfacial peeling can be provided.
The modified polyester-based elastomer of the present invention is also effective as a modifier for imparting properties such as flexibility to polar polymers such as ethylene-vinyl-based alcohol copolymers and polyamide-based polymers.
Therefore, a polar polymer composition containing the modified polyester-based elastomer of the present invention and a polar polymer provides a polar polymer composition in which physical properties such as flexibility and the like are improved compared to the polar polymer.

Description of Embodiments

The present invention will be described in detail below. The following description is an example of an embodiment of the present invention, and the present invention is not limited to the following description as long as it does not exceed the gist of the invention, and can be carried out with any modification within the scope of the gist of the present invention.
In the present invention, when "to" is used with numericals value or physical property values before and after it, it is used as including the values before and after it.
In the present invention, the density, melting point, hardness, and melt flow rate (MFR) of polyester-based elastomers and modified polyester-based elastomers are values measured as follows.

<Density>

A density is measured by the immersion method in accordance with JIS K7112.

<Melting point>

A melting point is measured using a differential scanning calorimeter (DSC). Specifically, a temperature is once raised to 300°C to erase a thermal history, then the temperature is lowered to 40°C at a temperature drop rate of 10°C/min, and the temperature is again raised at a temperature rise rate of 10°C/min and measured. The melting point is the temperature at the top of the endothermic peak. The unit is °C.

<Hardness>

A hardness is JIS-D hardness measured using a durometer in accordance with JIS K6253 (D hardness).

<MFR>

An MFR (melt flow rate) of the polyester-based elastomer and modified polyester-based elastomer described below is measured in accordance with JIS K7210 at a temperature of 230°C, a load of 2.16 kg, and for 10 minutes. In the measurement, the polyester-based elastomer and modified polyester-based elastomer are vacuum-dried in a pellet state at a temperature of 100°C for 4 hours to remove the moisture contained therein.

The modified polyester-based elastomer of the present invention is a modified polyester-based elastomer obtained by modifying a polyester polyether block copolymer consisting of a hard segment containing an aromatic polyester and a soft segment containing a polyalkylene ether glycol with an unsaturated carboxylic acid and/or a derivative thereof, and is characterized in that the modified polyester-based elastomer contains titanium and the titanium content is less than 250 wt ppm.

Hereinafter, the above-mentioned polyester polyether block copolymer for producing the modified polyester-based elastomer of the present invention by modification may be referred to as a "polyester-based elastomer" or a "raw polyester-based elastomer" or a "component (A)".

In addition, an unsaturated carboxylic acid and/or a derivative thereof used for modifying the polyester-based elastomer may be referred to as a "component (B)", and a radical generator used for the modification treatment may be referred to as a "component (C)".

In the present invention, modification refers to graft modification, terminal modification, modification by transesterification reaction, modification by decomposition reaction, and the like, of a polyester-based elastomer with an unsaturated carboxylic acid and/or a derivative thereof. Specifically, the site where the unsaturated carboxylic acid and/or its derivative is bonded may be a terminal functional group or an alkyl chain portion. In particular, the site where the unsaturated carboxylic acid and/or its derivative is bonded may be a terminal carboxyl group, a terminal hydroxyl group, or a carbon atom at the $\alpha$-position or $\beta$-position relative to the ether bond of the polyalkylene ether glycol segment. In particular, it is presumed that the unsaturated carboxylic acid and/or its derivative is bonded mostly to the $\alpha$-position relative to the ether bond of the polyalkylene ether glycol segment.

When a polyester-based elastomer is modified with an unsaturated carboxylic acid and/or its derivative, a modified polyester-based elastomer is usually obtained as a composition containing the modified polyester-based elastomer modified by the polyester-based elastomer, an unmodified polyester-based elastomer, the unsaturated carboxylic acid and/or its derivative used in the modification, and a radical generator as described below. The modified polyester-based elastomer of the present invention means a modified polyester-based elastomer composition obtained by the modification reaction in this way and containing residues such as the unmodified polyester-based elastomer, the unsaturated carboxylic acid and/or its derivative, and the like.

As the modified polyester-based elastomer of the present invention, a mixture of a modified polyester-based elastomer obtained by modifying a polyester-based elastomer and an unmodified polyester-based elastomer may be used, so long as the polyester-based elastomer contains a polyester-based elastomer that satisfies the titanium content specified in the present invention, preferably the polyalkylene ether glycol segment content described below, and more preferably the suitable acid value described below.

[Mechanism]

Since the modified polyester-based elastomer of the present invention has polyester as the main skeleton, it has high compatibility with ester-based polymers. In addition, the modified polyester-based elastomer can provide sufficient adhesion to gas barrier materials, particularly polyamide-based polymers and ethylene-vinyl alcohol-based copolymers. Furthermore, the modified polyester-based elastomer has an elastomer structure consisting of a hard segment (aromatic polyester) and a soft segment (polyalkylene ether glycol), which relieves distortion and residual stress that occur between the layers of the laminated body (between the gas barrier layer and the adhesive layer) during molding, thereby strengthening the adhesion.

The modified polyester-based elastomer of the present invention has a titanium content of a predetermined value or less. In order to produce such a modified polyester-based elastomer, a raw polyester-based elastomer having a titanium content of a predetermined value or less is usually used for modification. In this way, by using a polyester-based elastomer having an active titanium content of a predetermined value or less, hydrolysis during modification can be suppressed. This makes it possible to obtain modified polyester-based elastomers having excellent color tone and heat-resistant adhesion property.

When the titanium content of the modified polyester-based elastomer is a predetermined value or less, hydrolysis during molding and processing can be suppressed, and color tone and heat-resistant adhesion property can be maintained.

Furthermore, the modified polyester-based elastomer of the present invention has excellent compatibility with polar polymers such as ethylene-vinyl alcohol-based copolymers and polyamide-based polymers. Therefore, when the modified polyester-based elastomer of the present invention is mixed with these polar polymers to form a polar polymer composition, the modified polyester-based elastomer and the polar polymer can be sufficiently compatible. By reducing the size of the dispersed particles of the modified polyester-based elastomer in the polar polymer composition, the effect of improving properties such as flexibility and the like is achieved.

For this reason, the modified polyester-based elastomer of the present invention is also useful as a modifier for such polar polymers. And, by mixing the modified polyester-based elastomer of the present invention with a polar polymer, a polar polymer composition having excellent properties such as color tone, flexibility, and the like can be obtained.

Such modified polyester-based elastomer of the present invention can be produced industrially and advantageously by a method for producing a modified polyester-based elastomer of the present invention, which comprises a step of modifying a polyester-based elastomer polymerized in the presence of a titanium compound with an unsaturated carboxylic acid and/or a derivative thereof, wherein the polyester-based elastomer is a polyester polyether block copolymer consisting of a hard segment containing an aromatic polyester and a soft segment containing a polyalkylene ether glycol, and a titanium content in the polyester-based elastomer is less than 250 wt ppm. However, the method for producing the modified polyester-based elastomer of the present invention is not limited to the method for producing the modified polyester-based elastomer of the present invention.

The method for producing the modified polyester-based elastomer of the present invention will be described below, followed by the modified polyester-based elastomer of the present invention.

[Method for producing modified polyester-based elastomer]

[Polyester-based elastomer]

The raw polyester-based elastomer used in the method for producing the modified polyester-based elastomer of the present invention is a polyester polyether block copolymer consisting of a hard segment containing an aromatic polyester and a soft segment containing a polyalkylene ether glycol.

Usually, the polyester-based elastomer can be obtained by polycondensing a oligomer obtained by esterification or transesterification using i) an aliphatic and/or alicyclic diol having 2 to 12 carbon atoms, ii) an aromatic dicarboxylic acid and/or its alkyl ester, and iii) a polyalkylene ether glycol having a number average molecular weight of 400 to 6,000 as raw materials in the presence of a titanium compound.

As the i) aliphatic and/or alicyclic diol having 2 to 12 carbon atoms, those usually used as raw materials for ester-based polymers, particularly raw materials for polyester-based elastomers, can be used. Examples include ethylene glycol, propylene glycol, trimethylene glycol, 1,4-butanediol, 1,4-cyclohexanediol, and 1,4-cyclohexanedimethanol. Among these, 1,4-butanediol and ethylene glycol are preferred, and 1,4-butanediol is particularly preferred. These diols can be used alone or in a mixture of two or more.

As the ii) aromatic dicarboxylic acid, those generally used as raw materials for ester-based polymers, particularly polyester-based elastomers, can be used. Examples include terephthalic acid, isophthalic acid, phthalic acid, and 2,6-naphthalenedicarboxylic acid. Among these, terephthalic acid and 2,6-naphthalenedicarboxylic acid are preferred, and terephthalic acid is particularly preferred. Two or more of these dicarboxylic acids may be used in combination. When an alkyl ester of an aromatic dicarboxylic acid is used, the dimethyl ester, diethyl ester, or the like of the above dicarboxylic acid is used. Dimethyl terephthalate and 2,6-dimethyl naphthalate are preferred.

Examples of the iii) polyalkylene ether glycol include polyethylene glycol, poly(1,2 and 1,3-propylene ether) glycol, poly (tetramethylene ether) glycol, poly(hexamethylene ether) glycol, and poly(decamethylene ether) glycol. Among these, poly (tetramethylene ether) glycol is particularly preferred.

As the polyalkylene ether glycol, one having a number average molecular weight of 400 to 6,000 is usually used. The polyalkylene ether glycol preferably has a number average molecular weight of 600 to 4,000, and more preferably 900 to 3,000. By having a number average molecular weight equal to or higher than the lower limit of the above range, it becomes easier to control the degree of modification with the unsaturated carboxylic acid and/or its derivative within a desired range, and it tends to be easier to exhibit sufficient adhesiveness and functionality as a modifier. By having a number average molecular weight equal to or lower than the upper limit of the above range, it becomes possible to suppress phase separation in the system, and it tends to suppress deterioration in the physical properties of the resulting modified polyester-based elastomer.

Here, the "number average molecular weight" is measured by nuclear magnetic resonance (NMR) analysis.

As described below, the polyalkylene ether glycol is used so that the content of the polyalkylene ether glycol segment in the polyester-based elastomer is preferably 5 to 90 % by mass, more preferably 10 to 85 % by mass, and even more preferably 20 to 80 % by mass.

The polyester-based elastomer may be a copolymer of a small amount of a trifunctional triol or a tricarboxylic acid or its ester in addition to the above components, and may further be a copolymer of an aliphatic dicarboxylic acid such as adipic acid or its dialkyl ester.

<Titanium content>

In the production of polyester-based elastomers, titanium compounds may be used as polymerization catalysts.

Examples of the titanium compound include potassium oxalate titanate, alkoxy or aryloxy titanate compounds, titanium carbonate compounds, titanium halogenides, and titanium acetylacetonate. Among these, potassium oxalate titanate, and alkoxy or aryloxy titanate compounds are preferred, and alkoxy or aryloxy titanate compounds are particularly preferred. Among the alkoxy or aryloxy titanate compounds, tetraalkyl titanates (tetraalkoxytitaniums) or tetraaryl titanates (tetraaryloxytitaniums) are preferred. Specific examples include tetra-n-propyl titanate, tetraisopropyl titanate, tetra-n-butyl titanate, tetra-t-butyl titanate, tetraphenyl titanate, tetracyclohexyl titanate, tetrabenzyl titanate, or mixtures thereof. Among these, tetra-n-propyl titanate, tetraisopropyl titanate, and tetra-n-butyl titanate are particularly preferred, and tetra-n-butyl titanate is most preferred. Two or more of these titanium compounds may be used in combination.

In the process of producing the polyester-based elastomer, a titanium compound is used as a catalyst, and the titanium compound remains in the resulting polyester-based elastomer. In the present invention, the titanium (titanium atom) content of the raw polyester-based elastomer to be modified is less than 250 wt ppm, preferably 245 wt ppm or less, more preferably 240 wt ppm or less, and even more preferably 238 wt ppm or less. The lower limit of the titanium content is preferably 10 wt ppm or more, more preferably 30 wt ppm or more, and even more preferably 50 wt ppm or more.

The titanium (titanium atom) content of the polyester-based elastomer means the titanium content in the polyester-based elastomer. For example, when the polyester-based elastomer is composed of a plurality of polyester polyether block copolymers having different titanium contents, it means that the titanium content of the polyester polyether block copolymer as a whole may be less than 250 wt ppm.

A low titanium content of a polyester-based elastomer mainly means that the amount of titanium compound used as a catalyst in the process of producing the polyester-based elastomer is small. In this case, the sufficient polymerization reactivity is not be obtained and the polyester-based elastomer may not be obtained. When the titanium content of a polyester-based elastomer is high, the decomposition reaction is accelerated, the amount of terminal carboxyl groups increases, and hydrolysis progresses. As a result, the color tone of the modified polyester-based elastomer and a laminated body containing the modified polyester-based elastomer tend to deteriorate, and the heat-resistant adhesion property and functionality as a modifier also tend to deteriorate.

The titanium content of a polyester-based elastomer can be determined by an ashing-alkali fusion-ICP/AES method.

When a plurality of polyester-based elastomers are mixed, the titanium content of the mixture is determined by arithmetic averaging of the titanium contents of each polyester-based elastomer.

The titanium content of the polyester-based elastomer can be made less than 250 wt ppm as a whole by using one or more polyester-based elastomers having a titanium content of less than 250 wt ppm, or by combining a polyester-based elastomer having a titanium content of 250 wt ppm or more and a polyester-based elastomer having a titanium content of less than 250 wt ppm.

The titanium content of the polyester-based elastomer can be controlled by adjusting the amount of titanium compound catalyst used during production, the reaction temperature, the reaction time, and the like.

<Polyalkylene ether glycol segment content>

The content of the polyalkylene ether glycol segment in the polyester polyether block copolymer, which is the raw material polyester-based elastomer to be modified, is preferably 5 to 90 % by mass, more preferably 10 to 85 % by mass, and even more preferably 20 to 80 % by mass.

When two or more types of polyester polyether block copolymers are used, even if some of the polyester polyether block copolymers have a polyalkylene ether glycol segment content outside the range of 5 to 90% by mass, it is acceptable as long as the overall polyalkylene ether glycol segment content is within the range of 5 to 90% by mass.

By setting the content of the polyalkylene ether glycol segment in the polyester-based elastomer to be equal to or more than the above lower limit, it acts to alleviate the distortion and residual stress that occur between the layers of the laminated body. This results in good adhesion and excellent functionality as a modifier. By setting the content of the polyalkylene ether glycol segment to be equal to or less than the above upper limit, it is possible to suppress a decrease in the crystallinity of the polyester-based elastomer and prevent the polyester-based elastomer and the modified polyester-based elastomer from fusion together, thereby improving the handleability at room temperature.

The content of a polyalkylene ether glycol segment in a polyester-based elastomer is calculated based on the chemical shift of the hydrogen spectrum by dissolving the sample in a mixed solvent of deuterated chloroform/hexafluoroisopropanol and measuring the $^1$H NMR spectrum at room temperature using a nuclear magnetic resonance device (AVANCE 400 spectrometer manufactured by Bruker).

When two or more types of polyester-based elastomers are used, each polyester-based elastomer is used as the subject sample, and each is measured in the same manner as above to calculate the polyalkylene ether glycol segment content, and the polyalkylene ether glycol segment content can be calculated by proportional calculation based on the blending mass ratio of each polyester-based elastomer.

Theoretically, the content of the polyalkylene ether glycol segment in the modified polyester-based elastomer and the content of the polyalkylene ether glycol segment in the polyester-based elastomer before modification are the same value. In other words, it can be considered that there is no change in the content of the polyalkylene ether glycol segment before and after modification.

<Density>

The polyester-based elastomer preferably has a density of 1.00 to 1.35 g/cm$^3$, more preferably 1.02 to 1.30 g/cm$^3$, and even more preferably 1.04 to 1.25 g/cm$^3$. The density of the polyester-based elastomer correlates with the content of the polyalkylene ether glycol segment, and the higher the content of the polyalkylene ether glycol segment, the lower the density. By setting the density of the polyester-based elastomer to be equal to or higher than the lower limit of the above range, it becomes easier to prevent the heat-resistant adhesive property of the resulting modified polyester-based elastomer from decreasing. By setting the density of the polyester-based elastomer to be equal to or lower than the upper limit of the above range, it becomes easier to improve the adhesiveness of the resulting modified polyester-based elastomer with gas barrier materials. In addition, it also has an excellent effect as a modifier.

<Melting point>

The polyester-based elastomer preferably has a melting point of 145 to 245°C, more preferably 150 to 230°C, and even more preferably 160 to 215°C. By setting the melting point to be equal to or higher than the lower limit of the above range, it becomes easier to prevent the heat resistance of the resulting modified polyester-based elastomer from decreasing in the usage environment. By setting the melting point to be equal to or lower than the upper limit of the above range, it becomes easier to improve the co-extrusion moldability of the resulting modified polyester-based elastomer with gas barrier materials such as ethylene-vinyl alcohol-based copolymers that are thermally degraded at high temperatures. In addition, the effect as a modifier is also excellent.

<D hardness>

The D hardness (JIS-D hardness) of the polyester-based elastomer is preferably 10 to 80, more preferably 20 to 70, and even more preferably 25 to 60. When the JIS-D hardness is equal to or greater than the lower limit of the above range, the heat-resistant adhesion property of the resulting modified polyester-based elastomer tends to be excellent. When the JIS-D hardness is equal to or less than the upper limit of the above range, the resulting modified polyester-based elastomer tends to easily maintain the required flexibility when made into a laminated body such as a film, tube, or the like. In addition, the effect as a modifier is also excellent.

<MFR>

The MFR of the polyester-based elastomer measured in accordance with JIS K7210 at a temperature of 230°C, a load of 2.16 kg, and for 10 minutes is preferably 0.5 to 300 g/10 minutes, more preferably 1 to 150 g/10 minutes, and even more preferably 2 to 75 g/10 minutes. When the MFR of the polyester-based elastomer is equal to or less than the upper limit of the above range, the melt tension of the resulting modified polyester-based elastomer is increased, making it easier to suppress drawdown during molding. When the MFR is equal to or greater than the lower limit of the above range, it makes it easier to suppress deterioration of moldability such as uneven thickness, which occurs due to insufficient flowability of the resulting modified polyester-based elastomer.

Commercially available polyester-based elastomers may be used. Examples of commercially available product include "Tefabloc (registered trademark)" manufactured by Mitsubishi Chemical Corporation, "Pelprene (registered trademark)" manufactured by Toyobo Co., Ltd., and "Hytrel (registered trademark)" manufactured by DuPont-Toray Co.,

Ltd.

The polyester-based elastomer may be of one type. Two or more types of elastomers having different monomer compositions and physical properties may be subjected to modification with an unsaturated carboxylic acid and/or its derivative.

[Unsaturated carboxylic acid and/or its derivative]

As an unsaturated carboxylic acid used to modify the polyester-based elastomer, an $\alpha,\beta$-ethylenically unsaturated carboxylic acids are preferred. Examples of such unsaturated carboxylic acid include acrylic acid, methacrylic acid, ethacrylic acid, maleic acid, fumaric acid, tetrahydrofumaric acid, itaconic acid, citraconic acid, crotonic acid, and isocrotonic acid. Examples of the derivatives of unsaturated carboxylic acids include acid anhydrides and carboxylates of these unsaturated carboxylic acids, and may also be derivatives such as acid halides, amides, and imides. Among these derivatives, acid anhydrides are preferred.

As unsaturated carboxylic acids and/or derivatives thereof, among these, maleic acid and/or its anhydride are particularly preferred. A plurality of these compounds may be used in combination. Furthermore, vinyl silanes such as vinyltrimethoxysilane may be used in combination with unsaturated carboxylic acids and/or derivatives thereof.

[Radical generator]

The modification treatment in the production of the modified polyester-based elastomer of the present invention is preferably carried out in the presence of a radical generator.

The radical generator is used to carry out a radical reaction when the polyester-based elastomer is modified with an unsaturated carboxylic acid and/or its derivative.

Examples of the radical generator include peroxy esters, dialkyl peroxides, diacyl peroxides, hydroperoxides, ketone peroxides, and the like. Among these, dibenzoyl peroxide and 2,5-dimethyl-2,5-di(t-butylperoxy)hexane are preferably used as diacyl peroxides. These radical generators may be appropriately selected depending on the type of polyester-based elastomer, the type of unsaturated carboxylic acid and/or its derivative, and the modification conditions. Two or more types of radical generators may be used in combination. The radical generator may be dissolved in an organic solvent and added.

[Modification treatment method for modified polyester-based elastomer]

Any known method may be used for the process of modifying the polyester-based elastomer with the unsaturated carboxylic acid and/or its derivative, and the melt-kneading reaction method, solution reaction method, and suspension dispersion reaction method may be used. Usually, the melt-kneading reaction method is preferred.

When using the melt-kneading reaction method, the above-mentioned components (A) and (B), and if necessary, the component (C), may be uniformly mixed at a predetermined blend ratio, and then melt-kneaded. For mixing, a Henschel mixer, ribbon blender, V-type blender, and the like may be used. For melt-kneading, a single-screw or twin-screw extruder, roll, Banbury mixer, kneader, Brabender mixer, and the like can usually be used. Among these, a twin-screw extruder is particularly preferred.

The melt-kneading is carried out usually at a temperature of 100°C or higher, preferably 120°C or higher, and more preferably 150°C or higher, and usually 300°C or lower, preferably 280°C or lower, and more preferably 250°C or lower, so as to prevent thermal degradation of the resin.

The amount of the component (B) that is the unsaturated carboxylic acid and/or its derivative used in the modification, is usually 0.01 parts by mass or more, preferably 0.05 parts by mass or more, and more preferably 0.1 parts by mass or more, and usually 10 parts by mass or less, preferably 5 parts by mass or less, and more preferably 1 part by mass or less, based on 100 parts by mass of the polyester-based elastomer that is the component (A). By setting the amount of the unsaturated carboxylic acid and/or its derivative to be equal to or more than the above lower limit, it is easy to carry out sufficient modification. By setting the amount of the unsaturated carboxylic acid and/or its derivative to be equal to or less than the above upper limit, it is not only economical but also easy to prevent the unsaturated carboxylic acid and/or its derivative that did not contribute to the modification from acting as an impurity and reducing adhesiveness.

The amount of the radical generator that is the component (C) is usually 0.001 parts by mass or more, preferably 0.005 parts by mass or more, and more preferably 0.01 parts by mass or more, and usually 5 parts by mass or less, preferably 3 parts by mass or less, and more preferably 2 parts by mass or less, based on 100 parts by mass of the polyester-based elastomer that is the component (A). By adding the radical generator in an amount equal to or more than the above lower limit, the modification reaction can be sufficiently initiated. By adding the radical generator in an amount equal to or less than the above lower limit, it is possible to prevent a significant decrease in material strength due to the promotion of lowering molecular weight (lowering viscosity) of the component (A).

[Modified polyester-based elastomer]

[Titanium content]

As described above, when a titanium compound is used as a polymerization catalyst in the production of polyester-based elastomer, the titanium compound remains in the produced polyester-based elastomer, and the raw material polyester-based elastomer used for modification contains a titanium (titanium atom). As a result, the modified polyester-based elastomer also contains a titanium.

The titanium content of the modified polyester-based elastomer of the present invention is less than 250 wt ppm, preferably 248 wt ppm or less, more preferably 245 wt ppm or less, and particularly preferably 240 wt ppm or less. The lower limit of the titanium content is preferably 20 wt ppm or more, more preferably 40 wt ppm or more, and even more preferably 60 wt ppm or more.

The titanium (titanium atom) content of the modified polyester-based elastomer means the titanium content in the modified polyester-based elastomer. For example, when the modified polyester-based elastomer is composed of a plurality of modified polyester-based elastomers having different titanium contents, it means that the titanium content of the modified polyester-based elastomer as a whole may be less than 250 wt ppm.

A low titanium content of the modified polyester-based elastomer mainly means that the amount of titanium compound used as a catalyst in the process of producing of the raw polyester-based elastomer is small. In this case, sufficient polymerization reactivity may not be obtained, and the raw polyester-based elastomer may not be obtained. When the titanium content of the modified polyester-based elastomer is high, the decomposition reaction is accelerated, the amount of terminal carboxyl groups increases, and hydrolysis progresses. As a result, the color tone of the modified polyester-based elastomer and the laminated body containing the modified polyester-based elastomer tend to deteriorate, and the heat-resistant adhesion property also tends to deteriorate. For the same reason, the function as a modifier also tends to deteriorate.

As with the polyester-based elastomer, the titanium content of a modified polyester-based elastomer can be determined by an ashing-alkali fusion-ICP/AES method.

When a plurality of modified polyester-based elastomers are mixed, the titanium content of the mixture can be determined by arithmetic averaging of the titanium contents of each modified polyester-based elastomer.

The titanium content of the modified polyester-based elastomer can be made less than 250 wt ppm as a whole by using one or more modified polyester-based elastomers having a titanium content of less than 250 wt ppm, or by combining a modified polyester-based elastomer having a titanium content of 250 wt ppm or more and a modified polyester-based elastomer having a titanium content of less than 250 wt ppm.

When the titanium content of the raw polyester-based elastomer is low, the titanium content of the modified polyester-based elastomer obtained by modification tends to be low as well. To obtain a modified polyester-based elastomer having a titanium content of less than 250 wt ppm, it is preferable to use a polyester-based elastomer having a titanium content of less than 250 wt ppm as the raw polyester-based elastomer to be modified. However, the titanium content of the raw polyester-based elastomer and the titanium content of the modified polyester-based elastomer are not necessarily proportional to each other. This is because the titanium content of the modified polyester-based elastomer increases or decreases due to contamination from an extruder metal during the modification process or removal by a mesh filter. As mentioned above, the titanium content of the polyester-based elastomer can be controlled by adjusting the amount of titanium compound catalyst, reaction temperature, reaction time, and the like during the production of the polyester-based elastomer, but the titanium content of the modified polyester-based elastomer can be controlled by adjusting the titanium content of the raw polyester-based elastomer. The titanium content of the modified polyester-based elastomer can also be controlled by selecting a structure of a mesh filter or a type of metal of the extruder used in the modification treatment.

[Acid value]

The lower limit of the acid value of the modified polyester-based elastomer of the present invention is preferably 1 eq/T (equivalent/ton) or more, more preferably 5 eq/T or more, and even more preferably 10 eq/T or more, from the viewpoint of suppressing a generation of byproducts due to heating during molding. The upper limit of the acid value of the modified polyester-based elastomer is preferably 70 eq/T or less, more preferably 68 eq/T or less, and even more preferably 66 eq/T or less, from the viewpoint of color tone and heat-resistant adhesion property.

The acid value of the modified polyester-based elastomer can be determined, for example, by dissolving the modified polyester-based elastomer in a benzyl alcohol solvent under heating, conducting indicator titration with a 0.1 mol/L sodium hydroxide benzyl alcohol solution, and quantifying the amount of carboxyl groups per $1 \times 10^6$ g.

The acid value of the modified polyester-based elastomer can be adjusted to the above range by adjusting the temperature, time, degree of polymerization, and the like during the production of the modified polyester-based elastomer.

[Density]

The density of the modified polyester-based elastomer of the present invention is preferably 1.00 to 1.35 g/cm³, more preferably 1.02 to 1.30 g/cm³, and even more preferably 1.04 to 1.25 g/cm³. The density of the modified polyester-based elastomer correlates with the content of the polyalkylene ether glycol segment, and the higher the content of the polyalkylene ether glycol segment, the lower the density. In other words, by setting the density to be equal to or higher than the lower limit of the above range, it becomes easier to prevent the heat-resistant adhesion property from decreasing. By setting the density to be equal to or lower than the upper limit of the above range, it becomes easier to improve the adhesiveness with gas barrier materials and the functionality as a modifier.

[Melting point]

The melting point of the modified polyester-based elastomer of the present invention is preferably 145 to 245°C, more preferably 150 to 230°C, and even more preferably 160 to 215°C. By setting the melting point to be equal to or higher than the lower limit of the above range, it becomes easier to prevent the heat resistance from decreasing in the usage environment. By setting the melting point to be equal to or lower than the upper limit of the above range, it becomes easier to improve the co-extrusion moldability with gas barrier materials such as ethylene-vinyl alcohol-based copolymers that are thermally degranded at high temperatures.

[D hardness]

The D hardness (JIS-D hardness) of the modified polyester-based elastomer of the present invention is preferably 10 to 80, more preferably 20 to 70, and even more preferably 25 to 60. When the JIS-D hardness is equal to or more than the lower limit of the above range, the heat-resistant adhesive property and functionality as a modifier tend to be excellent. When the JIS-D hardness is equal to or less than the upper limit of the above range, it tends to be easier to maintain the flexibility required when it is made into a laminated body such as a film, tube, or the like.

[MFR]

The MFR of the modified polyester-based elastomer of the present invention measured in accordance with JIS K7210 at a temperature of 230°C, a load of 2.16 kg, and for 10 minutes is preferably 0.5 to 300 g/10 min, more preferably 1 to 300 g/10 min, even more preferably 1 to 150 g/10 min, and particularly preferably 2 to 75 g/10 min. By setting the MFR of the modified polyester-based elastomer to be equal to or less than the upper limit of the above range, the melt tension is increased, making it easier to suppress drawdown during molding. By setting the MFR of the modified polyester-based elastomer to be equal to or more than the lower limit of the above range, it is easier to suppress deterioration of moldability, such as uneven thickness, which occurs due to insufficient flowability.

[Polyalkylene ether glycol segment content]

As mentioned above, the content of the polyalkylene ether glycol segment in the modified polyester-based elastomer and the content of the polyalkylene ether glycol segment in the raw polyester-based elastomer before modification are theoretically the same value. The content of the polyalkylene ether glycol segment in 100% by mass of the modified polyester-based elastomer of the present invention is preferably 5 to 90% by mass, more preferably 10 to 85% by mass, and even more preferably 20 to 80% by mass. When the content of the polyalkylene ether glycol segment in the modified polyester-based elastomer is 5 to 90% by mass, the handling property is good, and when this modified polyester-based elastomer is used as an adhesive layer, it can provide good adhesiveness. In addition, it also has excellent functionality as a modifier.

Here, the content of the polyalkylene ether glycol segment in the modified polyester-based elastomer refers to the content of the polyalkylene ether glycol segment in the entire modified polyester-based elastomer. That is, for example, when two or more modified polyester-based elastomers are mixed and used, even if one of them is out of the polyalkylene ether glycol segment content range of 5 to 90 % by mass, it is acceptable as long as the polyalkylene ether glycol segment content of the modified polyester-based elastomer as a mixture is within the range of 5 to 90 % by mass.

[Acid modification rate]

There is no particular limit to the acid modification rate of the modified polyester-based elastomer of the present invention, but it is preferably 0.01 to 10. When the acid modification rate is equal to or higher than the lower limit of the above range, sufficient adhesiveness with a gas barrier layer is obtained. In addition, the functionality as a modifier is also excellent. When the acid modification rate is equal to or lower than the upper limit of the above range, discoloration due to unsaturated carboxylic acid and/or its derivatives can be suppressed. The lower limit of the acid modification rate is more preferably 0.1 or more, even more preferably 0.15 or more, and particularly preferably 0.16 or more. The upper limit of the acid modification rate is more preferably 4 or less, and even more preferably 0.8 or less.

The acid modification rate of the modified polyester-based elastomer is measured and calculated by the method described in the Examples section below.

[Adhesive polymer composition containing modified polyester-based elastomer]

The modified polyester-based elastomer of the present invention can be used to make an adhesive polymer composition. This adhesive polymer composition can be used in the adhesive layer of the laminated body of the present invention described below.

The content of the modified polyester-based elastomer of the present invention in the adhesive polymer composition is preferably 50% by mass or more, more preferably 55% by mass or more, and even more preferably 60% by mass or more. When the content of the modified polyester-based elastomer of the present invention in the adhesive polymer composition is equal to or more than the above lower limit, the adhesiveness to a gas barrier layer and other layers such as ester-based polymer layers can be sufficiently increased. There is no particular limit to the upper limit of the content of the modified polyester-based elastomer of the present invention in the adhesive polymer composition, and it is less than 100% by mass.

The adhesive polymer composition contains, in addition to the modified polyester-based elastomer of the present invention, any component (hereinafter, sometimes referred to as "other components") according to the purpose. The other components may be used alone or in any combination and ratio of two or more.

Specific examples of the other components include polymers and rubber components (ester-based polymers such as polyethylene terephthalate, polybutylene terephthalate, and the like, styrene (co)polymers such as polystyrene, and the like, polyolefins, acrylic/methacrylic copolymers such as polymethyl methacrylate, and the like) other than the modified polyester-based elastomer of the present invention, various additives such as heat stabilizers, weather stabilizers (antioxidants, light stabilizers, ultraviolet absorbers, and the like), flame retardants, anti-blocking agents, slip agents, antistatic agents, fillers (inorganic and/or organic fillers, and the like), processing aids, plasticizers such as paraffin oil, crystal nucleating agents, impact modifiers, compatibilizers, neutralizers for catalyst residues, carbon black, colorants (pigments, dyes, and the like), antifogging agents, crosslinking agents, crosslinking aids, chain extenders, dispersants, antibacterial agents, antiviral agents, optical brighteners, and the like. Among these, it is preferable to add at least one of various antioxidants such as phenol-based, phosphite-based, thioether-based, and aromatic amine-based antioxidants, and the like. When these antioxidants are used, their content is not limited, but the content of these antioxidants is usually 0.01% by mass or more, preferably 0.05% by mass or more, and usually 5% by mass or less, preferably 2% by mass or less, in 100% by mass of the adhesive polymer composition constituting the adhesive layer.

[Laminated body]

An adhesive layer made of the modified polyester-based elastomer of the present invention or an adhesive polymer composition containing this modified polyester-based elastomer can be laminated with a gas barrier layer to form a laminated body. That is, the modified polyester-based elastomer of the present invention or the adhesive polymer composition containing this modified polyester-based elastomer can be used to form the adhesive layer of the laminated body.

The laminated body using the modified polyester-based elastomer of the present invention is preferably a laminated body having two or more layers laminated together.

In particular, the laminated body is preferably a laminated body of the present invention having a base layer, a layer made of the modified polyester-based elastomer of the present invention or the adhesive polymer composition containing the modified polyester-based elastomer of the present invention as an adhesive layer, and a resin layer such as a gas barrier layer, and the like.

Among the laminated bodies of the present invention, it is preferable that the gas barrier layer is made of a polyamide-based polymer and/or an ethylene-vinyl alcohol-based copolymer, and it is preferable that the laminated body has an ester-based polymer layer as necessary. It is more preferable that the laminated body of the present invention has a gas barrier layer made of a polyamide-based polymer and/or an ethylene-vinyl alcohol-based copolymer, the adhesive layer made of the modified polyester-based elastomer of the present invention or the adhesive polymer composition containing the modified polyester-based elastomer, and a base layer made of an ester-based polymer. Among these, a laminated body in which a base layer made of an ester-based polymer, an adhesive layer made of the modified polyester-based elastomer of the present invention or the adhesive polymer composition containing the modified polyester-based elastomer, and a gas barrier layer are laminated in this order is preferably used. In this case, it is also possible to make the laminated body in which some layers are laminated in two or more layers, such as base layer/adhesive layer/gas barrier layer/adhesive layer/base layer.

[Adhesive layer]

The adhesive layer made of the modified polyester-based elastomer of the present invention or the adhesive polymer composition containing this modified polyester-based elastomer contains the modified polyester-based elastomer of the present invention in an amount of preferably 50% by mass or more, more preferably 55% by mass or more, and even more preferably 60% by mass or more, based on the total components of the adhesive layer. When the content of the modified polyester-based elastomer is equal to or more than the above lower limit, the adhesiveness with the gas barrier layer or the ester-based polymer layer, which is the base layer, and the like can be sufficiently increased. There is no particular upper limit to the content of the modified polyester-based elastomer of the present invention, and it may be 100% by mass.

[Gas barrier layer]

The gas barrier layer according to the present invention may be a polyamide-based polymer layer, an ethylene-vinyl alcohol-based copolymer layer, a polyvinyl alcohol layer, a metal foil such as aluminum, and the like an aluminum vapor deposition film, a transparent vapor deposition film such as alumina vapor deposition, silica vapor deposition or the like, a polyvinylidene chloride layer, and the like. Among these, a layer mainly composed of polyamide or an ethylene-vinyl alcohol-based copolymer is preferable.

Polyamide-based polymers are usually produced by polycondensation reaction of diamines and dicarboxylic acids, but can also be obtained by ring-opening polymerization of lactams. Specific examples of these polyamide-based polymers include polyamide 6,6, polyamide 6,9, polyamide 6,10, polyamide 6,12, polyamide 4,6, polyamide 6, polyamide 12, polyamide 11, and the like. Copolymer polyamides such as polyamide 6/6,6, polyamide 6/6,10, polyamide 6/12, polyamide 6/6,12, polyamide 6/6,6/6,10, polyamide 6/6,6/12, and the like can also be used. Semi-aromatic polyamides such as polyamide 6/6,T (T: terephthalic acid component), polyamide 6,T/6,I (I: isophthalic acid component), polyamide MXD6, and the like can also be used. Semi-aromatic polyamide is produced, for example, by substituting a dicarboxylic acid with an aromatic dicarboxylic acid such as terephthalic acid and isophthalic acid (in this case the diamine may also be substituted with an alicyclic diamine), or by substituting a diamine with an aromatic diamine such as metaxylenediamine. Polyesteramides in which a portion of the diamine is substituted with a diol can also be used. Furthermore, polyamide-based polymers produced using diamines or dicarboxylic acids synthesized from raw materials derived from plants origin can also be used. Particularly preferred polyamide-based polymers are polyamide 6, polyamide 6,6, polyamide 12, polyamide 11, and polyamide MXD6.

Commercially available polyamide-based polymers include, for example, "Novamid (registered trademark)" manufactured by DSM Japan Engineering Plastics K.K., "Xencor (registered trademark)" and "Amodel (registered trademark)" manufactured by Solvay, "Rilsan (registered trademark)" manufactured by Arkema, "MX Nylon (registered trademark)" manufactured by Mitsubishi Gas Chemical Company, Inc., "Reny (registered trademark)" manufactured by Mitsubishi Engineering Plastics Company, and the like.

The gas barrier layer according to the present invention may contain only one type of polyamide-based polymer, or may contain two or more types having different monomer compositions as described above. The gas barrier layer according to the present invention preferably contains the polyamide-based polymer as a main component in an amount of usually 50% by mass or more, particularly 65 to 100% by mass, and even more particularly 75 to 100% by mass. When the content of the polyamide-based polymer content in the gas barrier layer is equal to or higher than the above lower limit, excellent mechanical strength and gas barrier properties can be obtained.

The ethylene-vinyl alcohol-based copolymer is produced by saponifying an ethylene-vinyl acetate copolymer in the presence of alcohol. As the ethylene-vinyl alcohol-based copolymer constituting the gas barrier layer, an ethylene-vinyl alcohol-based copolymer obtained by saponifying an ethylene-vinyl acetate copolymer having an ethylene content of preferably 15 to 65 mol%, and more preferably 20 to 50 mol%, to a degree of saponification of preferably 50% or more, and more preferably 90% or more, is preferably used.

Commercially available products of such ethylene-vinyl alcohol-based copolymers include, for example, "Soarnol (registered trademark)" manufactured by Mitsubishi Chemical Corporation, "Eval (registered trademark)" manufactured by Kuraray Co., Ltd., and "Evasin (registered trademark)" manufactured by Chang Chun Group.

The gas barrier layer according to the present invention may contain only one type of ethylene-vinyl alcohol-based copolymer, or may contain two or more types with different degrees of saponification or monomer compositions. The gas barrier layer according to the present invention preferably contains the ethylene-vinyl alcohol-based copolymer as a main component in an amount of usually 50% by mass or more, particularly 65 to 100% by mass, and even more particularly 75 to 100% by mass. When the content of ethylene-vinyl alcohol-based copolymer in the gas barrier layer is equal to or higher than the above lower limit, excellent gas barrier properties can be obtained.

Components other than the polyamide-based polymers and the ethylene-vinyl alcohol-based copolymers that may be contained in the gas barrier layer are not particularly limited. Examples of the components include polymer components such as polyolefins, styrene (co)polymers such as polystyrene and the like, acrylic/methacrylic copolymers and the like, and various additives such as heat stabilizers, weather stabilizers (antioxidants, light stabilizers, ultraviolet absorbers, and the like), flame retardants, anti-blocking agents, slip agents, fillers (inorganic and/or organic fillers, and the like), processing aids, plasticizers such as paraffin oil, crystal nucleating agents, impact modifiers, compatibilizers, neutralizers for catalyst residues, colorants (pigments, dyes, and the like), and the like. Note that "(co)polymer" here means either or both of "polymer" and "copolymer."

[Base layer]

Constituent components that constitute the base layer according to the present invention include thermoplastic polymers such as ester-based polymers, styrene (co)polymers such as polystyrene and the like, polyolefins, acrylic/-methacrylic copolymers such as polymethyl methacrylate and the like, polyvinyl chloride, ABS, polycarbonates, and the like. Among these, a layer made of an ester-based polymer is suitable in order to impart functionality such as fragrance preservation, rigidity, heat resistance, cold resistance, surface printability, and the like.

An ester-based polymer is produced by dehydration condensation of a polyvalent carboxylic acid and a polyalcohol. For example, one obtained by polycondensation of a dicarboxylic acid and a diol can be mentioned.

The above-mentioned carboxylic acid is not particularly limited, but examples thereof include aromatic dicarboxylic acids such as terephthalic acid, isophthalic acid, diphenyl ether-4,4-dicarboxylic acid, naphthalene-1,4- or 2,6-dicarboxylic acid, and the like; aliphatic dicarboxylic acids such as oxalic acid, succinic acid, adipic acid, sebacic acid, undecadicarboxylic acid, and the like; and alicyclic dicarboxylic acids such as hexahydroterephthalic acid, and the like.

The above-mentioned diol is not particularly limited, but examples thereof include aliphatic glycols such as ethylene glycol, propylene glycol, 1,4-butanediol, neopentyl glycol, and the like; and alicyclic glycols such as cyclohexanedimethanol, and the like; and aromatic dihydroxy compounds such as bisphenol A, and the like.

The above-mentioned ester-based polymers include, for example, polyethylene terephthalate (PET), copolymerized PET, polybutylene terephthalate, polyethylene naphthalate, polycyclohexyne terephthalate, and polyester-based elastomers. These ester-based polymers can be used alone, or may be used as a mixture of multiple ester-based polymers.

The polyamide, ethylene-vinyl alcohol-based copolymer, and ester-based copolymer may contain any of the following components, or a combination of these components: biomass-derived components, chemically recycled polymer components polymerized using recycled monomers or oligomers obtained by depolymerizing plastic waste materials as starting materials; or material recycled components obtained by crushing edges, trimming waste, slit waste, and the like generated during film production, or obtained by melting and pelletizing the afore-mentioned waste scrap or defective film.

[Configuration of gas barrier layer and base layer]

The configuration of the gas barrier layer and the base layer is not limited to a film or a sheet, and may be in the form of woven fabric or nonwoven fabric. The gas barrier layer and the base layer may have a single layer structure or a multilayer structure. The method for producing a substrate having a multilayer structure is not particularly limited, and examples thereof include a co-extrusion film method, a dry lamination method, a wet lamination method, a hot melt lamination method, an extrusion lamination method, a thermal lamination method, and the like.

[Other Constituent Layers]

The laminated body of the present invention may have any layer other than the adhesive layer which is made of the modified polyester-based elastomer of the present invention or the adhesive polymer composition containing the modified polyester-based elastomer of the present invention, the gas barrier layer, and the base layer.

[Layer Configuration]

The laminated body of the present invention may also be a laminated body having three or more layers, including the afore-mentioned adhesive layer, the gas barrier layer, and/or the base layer.

The laminated body of the present invention may be in the form of a laminate film, a laminate sheet, a laminate tube, or the like. Here, "film" and "sheet" both mean a planar molded body and have the same meaning.

[Thickness]

The total thickness of the laminated body of the present invention is not particularly limited and can be adjusted appropriately depending on the application. The total thickness of the laminated body of the present invention is preferably 20 $\mu$m or more, more preferably 50 $\mu$m or more, and even more preferably 100 $\mu$m or more, and preferably 10 mm or less, more preferably 6 mm or less, and even more preferably 1 mm or less. By having the thickness within the above range, it becomes easy to manufacture a laminated body without wrinkles or cracks.

The thickness of the adhesive layer made of the modified polyester-based elastomer of the present invention or the adhesive polymer composition containing the modified polyester-based elastomer of the present invention is preferably 1 $\mu$m or more, more preferably 2 $\mu$m or more, and even more preferably 10 $\mu$m or more, and preferably 1 mm or less, more preferably 0.5 mm or less, and even more preferably 0.1 mm or less.

The thickness of the gas barrier layer is generally 0.002 to 1 mm.

The thickness of the base layer is generally 0.01 to 5 mm.

[Method for producing laminated body]

Various conventionally known methods can be used to producing the laminated body of the present invention.

For example, a co-extrusion method can be used in which individual molten polymers melted in an extruder are fed into a multi-layer die and laminated in the die to produce an inflation film, cast film, sheet, tube, pipe, or bottle. A co-injection molding may also be used in which individual molten polymers are injected sequentially into the same mold. A co-extrusion lamination of unstretched test tube-shaped parisons, and the like may be also performed.

[Modifier]

The modifier of the present invention contains the modified polyester-based elastomer of the present invention described above, and is particularly useful as a modifier for modifying the properties such as flexibility of polar polymers such as ethylene-vinyl alcohol-based copolymers and polyamide-based polymers.

When the modified polyester-based elastomer of the present invention is used as a modifier for these polar polymers, there is no particular restriction on the mixing ratio of the modified polyester-based elastomer of the present invention to the polar polymer. However, it is preferable to use the modified polyester-based elastomer of the present invention in an amount of preferably 1 mass% or more, more preferably 3 mass% or more, and even more preferably 5 mass% or more, and preferably 30 mass% or less, more preferably 25 mass% or less, even more preferably 23 mass% or less, and particularly preferably 20 mass% or less, based on the total of the polar polymer and the modified polyester-based elastomer of the present invention.

When the ratio of the modified polyester-based elastomer of the present invention is within the above range, the modifying effect of the modified polyester-based elastomer of the present invention can be fully obtained without impairing the properties as a polar polymer.

[Polar polymer composition]

The polar polymer composition of the present invention is a polar polymer composition containing 1 to 30 mass% of the modified polyester-based elastomer of the present invention described above based on the total of the polar polymer and the modified polyester-based elastomer of the present invention, and the polar polymer contains at least one selected from an ethylene-vinyl alcohol-based copolymer and a polyamide-based polymer.

[Polar polymer]

Examples of the ethylene-vinyl alcohol-based copolymer and polyamide-based polymer contained in the polar polymer composition of the present invention include those exemplified as the ethylene-vinyl alcohol-based copolymer and polyamide-based polymer contained in the gas barrier layer of the laminated body of the present invention described above, and preferred examples thereof are also the same.

Ethylene-vinyl alcohol-based copolymer and polyamide-based polymer may each be used alone or in a mixture of two or more. One or more ethylene-vinyl alcohol-based copolymers and one or more polyamide-based polymers may be used in a mixture.

[Modified polyester-based elastomer content]

In the polar polymer composition of the present invention, when the content of the modified polyester-based elastomer of the present invention is 1% by mass or more based on the total of the polar polymer and the modified polyester-based elastomer of the present invention, the modifying effect achieved by containing the modified polyester-based elastomer of the present invention can be sufficiently obtained. When the content of the modified polyester-based elastomer of the present invention is 30% by mass or less based on the total of the polar polymer and the modified polyester-based elastomer of the present invention, the inherent properties of the polar polymer can be sufficiently obtained. From this viewpoint, the content of the modified polyester-based elastomer of the present invention is preferably 3% by mass or more, and more preferably 5% by mass or more based on the total of the polar polymer and the modified polyester-based elastomer of the present invention. On the other hand, it is preferably 25% by mass or less, more preferably 23% by mass or less, and even more preferably 20% by mass or less. From the same viewpoint, the content of the polar polymer is 70% by mass or more, preferably 75% by mass or more, more preferably 77% by mass or more, and even more preferably 80% by mass based on the total of the polar polymer and the modified polyester-based elastomer. On the other hand, it is 99% by mass or less, preferably 97% by mass or less, and even more preferably 95% by mass or less.

[Other components]

The polar polymer composition of the present invention can be blended with polymers other than the polar polymer and the modified polyester-based elastomer of the present invention and optional additives, and the like (hereinafter, these are referred to as "other components") according to various purposes within a range that does not significantly impair the effects of the present invention. Only one type of other component may be used, or two or more types may be used in any combination and ratio.

Examples of the additives include antioxidants, ultraviolet absorbers, plasticizers, lubricants, fillers, and antistatic agents. The total content of these additives in the polar polymer composition of the present invention is usually 50% by mass or less, preferably 20% by mass or less, and more preferably 10% by mass or less.

[Method for producing polar polymer composition]

There is no particular restriction on the method for mixing each component to obtain the polar polymer composition of the present invention. Examples thereof include a method of dry blending the polar polymer, the modified polyester-based elastomer of the present invention, and other components used as needed at once and melt-kneading; and a method of melt-kneading a part of the polar polymer, the modified polyester-based elastomer of the present invention, and other components used as needed in advance, and then blending the other components and melt-kneading.

Specific examples of methods for melt-kneading include a method of uniformly mixing each component in a predetermined blending ratio using a Henschel mixer, ribbon blender, V-type blender, or the like, and then kneading using a multi-screw kneading extruder, for example, twin-screw kneading extruder PCM30 manufactured by Ikegai Corp.

The temperature for melt-kneading each component is usually 100 to 300°C, preferably 120 to 280°C, more preferably 150 to 250°C, similar to the temperature during modification treatment with unsaturated carboxylic acid and/or its derivative in the modified polyester-based elastomer of the present invention described above.

[Molded product]

The polar polymer composition of the present invention can be molded into a molded product (hereinafter, sometimes referred to as a "polar polymer molded product").

Examples of the shape of the polar polymer molded product include films, sheets, tapes, cups, trays, tubes, bottles, pipes, filaments, irregular cross-section extrusions, various irregular shaped moldings, and the like.

There are no particular limitations on the molding method for the polar polymer composition of the present invention, and any molding method applicable to general polymer compositions can be used. Examples thereof include an extrusion molding, a blow molding, an injection molding, a thermoforming, and the like.

Furthermore, in the molding process, a heat stretching treatment is often performed to improve the physical properties of the molded product or to mold it into any desired container shape. Here, the heat stretching treatment refers to

**EP 4 491 654 A1**

an operation of uniformly molding a film, sheet, or parison-shaped molded product that has been uniformly heated thermally into a cup, tray, tube, bottle, or film shape by using chucks, plugs, vacuum force, compressed air force, blowing, or the like. Examples of this stretching method include a roll stretching, a tenter stretching, a tubular stretching, a stretch blowing, a vacuum molding, a compressed air molding, a vacuum compressed air molding, and the like. Stretching may be either uniaxial or biaxial, and in the case of biaxial stretching, either simultaneous biaxial stretching or sequential biaxial stretching can be used. The stretching temperature is usually 60 to 170°C, and more preferably 80 to 160°C.

EXAMPLES

Hereinafter, the contents of the present invention will be described in further detail with reference to Examples. The present invention is not limited to the following Examples as long as the present invention is within the gist thereof. The values of various production conditions and evaluation results in the following Examples are to be understood as preferred upper or lower limit values of embodiments of the present invention, and preferred ranges may be a range defined by a combination of the upper or lower limit value and a value of an Example described below or by a combination of values of Examples described below.

[Raw materials]

The raw materials used in the production of adhesive polymer compositions containing modified polyester-based elastomers in the following Examples and Comparative Examples are as follows.

[Materials for adhesive layer: adhesive polymer composition containing modified polyester-based elastomer]

<Component (A)>

A-1: polyester-based elastomer

A polyester-based elastomer (density: 1.07 g/cm$^3$, melting point: 160.1°C, JIS-D hardness: 24, MFR: 20 g/10 min) was used. The elastomer is a polyester-polyether block copolymer having polybutylene terephthalate as a hard segment and poly (tetramethylene ether) glycol having a number average molecular weight of 2,000 as a soft segment, and the content of poly (tetramethylene ether) glycol segments in the copolymer is 73% by mass.

A-2: polyester-based elastomer

A polyester-based elastomer (density: 1.10 g/cm$^3$, melting point: 186.1°C, JIS-D hardness: 31, MFR: 21 g/10 min) was used. The elastomer is a polyester-polyether block copolymer having polybutylene terephthalate as a hard segment and poly (tetramethylene ether) glycol having a number average molecular weight of 2,000 as a soft segment, and the content of poly (tetramethylene ether) glycol segments in the copolymer is 64% by mass.

A-3: polyester-based elastomer

A polyester-based elastomer (density: 1.10 g/cm$^3$, melting point: 160.6°C, JIS-D hardness: 38, MFR: 17 g/10 min) was used. The elastomer is a polyester-polyether block copolymer having polybutylene terephthalate as a hard segment and poly (tetramethylene ether) glycol having a number average molecular weight of 1,000 as a soft segment, and the content of poly (tetramethylene ether) glycol segments in the copolymer is 61% by mass.

A-4: polyester-based elastomer

A polyester-based elastomer (density: 1.09 g/cm$^3$, melting point: 184.8°C, JIS-D hardness: 31, MFR: 26 g/10 min) was used. The elastomer is a polyester-polyether block copolymer having polybutylene terephthalate as a hard segment and poly (tetramethylene ether) glycol having a number average molecular weight of 2,000 as a soft segment, and the content of poly (tetramethylene ether) glycol segments in the copolymer is 64% by mass.

A-5: polyester-based elastomer

A polyester-based elastomer (density: 1.06 g/cm$^3$, melting point: 147.2°C, JIS-D hardness: 22, MFR: 25 g/10 min) was used. The elastomer is a polyester-polyether block copolymer having polybutylene terephthalate as a hard segment and poly (tetramethylene ether) glycol having a number average molecular weight of 2,000 as a soft segment,

17

and the content of poly (tetramethylene ether) glycol segments in the copolymer is 75% by mass.

A-6: polyester-based elastomer

A polyester-based elastomer (density: 1.12 g/cm$^3$, melting point: 165°C, JIS-D hardness: 33, MFR: 29 g/10 min) was used. The elastomer is a polyester-polyether block copolymer having polybutylene terephthalate as a hard segment and poly (tetramethylene ether) glycol having a number average molecular weight of 1,000 as a soft segment, and the content of poly (tetramethylene ether) glycol segments in the copolymer is 58% by mass.

<Component (B)>

B: Unsaturated carboxylic acid anhydride

"Maleic anhydride (special grade reagent)" (particle size 5 to 10 mm) manufactured by Wako Pure Chemical Industries, Ltd. was crushed using a small mixer to a particle size of 1 mm or less and used.

<Component (C)>

C: Benzoyl peroxide

"Niper (registered trademark) BMTK-40" manufactured by NOF Corporation was used.

<Additive (anti-blocking agent)>

X: Polyethylene wax "ACumist B-6 (registered trademark)" manufactured by Honeywell was used.

[Gas barrier layer material]

Polyamide (PA6)

"Novamid (registered trademark) 1020" manufactured by DSM Japan Engineering Plastics K.K. was used.

[Base layer material]

Ester-based polymer

"Novaduran (registered trademark) 5505S" manufactured by Mitsubishi Engineering-Plastics Corporation was used.

[Polar polymer]

<Polyamide-based polymer: Polyamide (PA6)>

"Novamid (registered trademark) 1020" manufactured by DSM Japan Engineering Plastics K.K. was used.

<Ethylene-vinyl alcohol-based copolymer (EVOH)>

"Soarnol (registered trademark) DC3203RB" manufactured by Mitsubishi Chemical Corporation was used.

[Evaluation method]

In the Examples and Comparative Examples, the physical properties were evaluated by the following method. For Examples 1-3 and Comparative Examples 1-3, the physical properties were evaluated for the modified polyester-based elastomer, and for the other Examples and Comparative Examples, the physical properties were evaluated for the adhesive polymer composition containing the modified polyester-based elastomer.
In the adhesive polymer composition containing the modified polyester-based elastomer produced in the Examples and Comparative Examples, the content of additive (anti-blocking agent) other than the modified polyester-based elastomer is very small. Therefore, the evaluation results of the adhesive polymer composition can be regarded as the evaluation results of the modified polyester-based elastomer, and are therefore shown as the value of the modified polyester-based elastomer.

[Titanium content]

The titanium content of the polyester-based elastomer, the modified polyester-based elastomer, and the adhesive polymer composition containing the polyester-based elastomer was measured according to the method described above.

[Polyalkylene ether glycol segment content]

The polyalkylene ether glycol content in the polyester-based elastomer, the modified polyester-based elastomer, and the adhesive polymer composition containing the polyester-based elastomer was measured according to the method described above.

[MFR]

MFR was measured in accordance with JIS K7210 under conditions of a temperature of 230°C, a load of 2.16 kg, and 10 minutes after drying the adhesive polymer composition containing a modified polyester-based elastomer in a pellet form at a temperature of 100°C for 4 hours to remove the moisture contained therein.

[Acid value]

The acid value was measured by neutralization titration. Specifically, the procedure was as follows: A sample was placed in benzyl alcohol solvent and dissolved by heating in an oil bath at a temperature of 195°C. Chloroform solvent was then added and cooled, and indicator titration was performed using a 0.1 mol/L sodium hydroxide benzyl alcohol solution having a known titer. The end point was the point at which the sample solution changed color from yellow to red, and the acid (carboxyl group) value was calculated using the following formula.

[Equation 1]

$$\text{Acid value (eq/T)} = \frac{(V_1 - V_0) \times f \times 0.1}{S} \times 1000$$

In the above formula,

S: mass of sample (g)

$V_C$: amount of 0.1 mol/L sodium hydroxide benzyl alcohol solution required for blank test (mL)

$V_1$: amount of 0.1 mol/L sodium hydroxide benzyl alcohol solution required for titration in this test (mL)

f: titer of 0.1 mol/L sodium hydroxide benzyl alcohol solution

[Density]

Density was measured by the immersion method in accordance with JIS K7112.

[Melting point]

Melting point was measured using a differential scanning calorimeter (DSC). Specifically, it was as follows: After the temperature was raised to 300°C to erase the thermal history, the temperature was lowered to 40°C at a rate of 10°C/min, and then raised again at a rate of 10°C/min to measure. The melting point was determined as the temperature at the top of the endothermic peak. The unit is °C.

[Hardness]

Hardness was measured using a durometer in accordance with JIS K6253 (D hardness).

[Acid modification rate]

The acid modification rate refers to the content of unsaturated carboxylic acid components in the modified polyester-based elastomer when measured using an infrared spectrometer (JASCOFT/IR610, manufactured by JASCO Corporation). The acid modification rate was determined by measuring the ratio of the absorption characteristic of unsaturated carboxylic acid and/or its derivatives (1900 to 1600 cm$^{-1}$) to the absorption characteristic of aromatic rings in the hard segment (1000 to 800 cm$^{-1}$) in a sample obtained by press-molding pellets of an adhesive polymer composition containing a modified polyester-based elastomer into a sheet having a thickness of 20 to 50 $\mu$m at a temperature of 230 °C.

[Color tone (pellet YI)]

The color tone (pellet YI) was measured using "ZE-2000" manufactured by Nippon Denshoku Industries Co., Ltd. The lower the YI value, the less yellowish the color is and the better the color tone is.

[Adhesive strength of laminated body]

In general, when the interlaminar strength of the laminated body is 2N/15mm or more, the interlaminar strength is considered to be sufficient practically, and samples that had an adhesiveness retention rate of more than 80% after the heat resistance test were evaluated as acceptable.

<Initial adhesive strength>

The five-layer film obtained in each Example was cut into a strip having a width of 15 mm parallel to the molding direction to prepare a test piece. A T-peel test was performed on the test piece at a speed of 300 mm/min in a constant temperature atmosphere of 23°C to measure the adhesive strength. Here, the adhesive strength in Examples 1 to 6 and Comparative Examples 1 to 3 is the adhesive strength at the interface between the PA6 layer and the adhesive layer.

<Heat-resistant adhesive strength>

A rectangular test piece was prepared from the five-layer film obtained in each Example in the same manner as above. The test piece was left to stand in a gear oven (Toyo Seiki) at a temperature of 150°C for 16 hours and then removed. Thereafter, a T-peel test was performed at a speed of 300 mm/min in a constant temperature atmosphere of 23°C to measure the adhesive strength. As above, the adhesive strength in Examples 1 to 6 and Comparative Examples 1 to 3 is the adhesive strength at the interface between the PA6 and the adhesive layer.

[Adhesive strength retention rate]

The ratio (percentage) of the heat-resistant adhesive strength to the initial adhesive strength was calculated.

[Flexural modulus]

The flexural modulus was measured in accordance with ISO178.

[Izod impact strength]

Izod impact strength was measured at four temperatures (23°C, 0°C, -30°C, -50°C) in accordance with ISO 180/1A.

[Example 1-1]

<Production of adhesive polymer composition containing modified polyester-based elastomer>

As shown in Table 1, 100 parts by mass of polyester-based elastomer A-1, 0.5 parts by mass of maleic anhydride B, and 0.1 parts by mass of benzoyl peroxide C were mixed by dry blending. The mixture was melt-kneaded using a twin-screw extruder (manufactured by The Japan Steel Works Ltd., TEX25αIII, D=25mmφ, L/D=53) at a set temperature of 180 to 240°C, a screw rotation speed of 200 to 400 rpm, and an extrusion rate of 15 to 30 kg/h, and pellets were obtained by strand cutting. In order to prevent mutual fusion between pellets, 0.1 parts by mass of anti-blocking agent X was added to the obtained modified polyester-based elastomer, and dry blended to obtain pellets of an adhesive polymer composition containing a modified polyester-based elastomer.

The adhesive polymer composition containing the modified polyester-based elastomer was subjected to measurement of MFR and color tone.

<Production of laminated body>

A laminated body was produced using the adhesive polymer composition containing the modified polyester-based elastomer obtained above as an adhesive layer material.

A film having five-layers was produced as a laminated body using a multilayer film molding machine (Labtech Engineering Co.) provided with a 3-kind, 5-layer feed block type T-die having a width of 350 mm. The laminated body included five layers; an ester-based polymer layer; adhesive layer made of the adhesive polymer composition containing the modified polyester-based elastomer; polyamide (PA6) layer; adhesive layer made of the adhesive polymer composition containing the modified polyester-based elastomer; and ester-based polymer layer. The temperature of the T-die was set to 240°C, the molding speed was 6 m/min., and the cast roll temperature was 80°C, whereby a film having a total thickness of 120 μm was obtained. Each layer of the film had the thicknesses of 40 μm, 10 μm, 20 μm, 10 μm, and 40 μm.

The adhesive strength of the obtained five-layers film was measured.

The above measurement results are shown in Table 1.

[Examples 1-2 to 1-6, Comparative Examples 1-1 to 1-3]

Pellets of the adhesive polymer composition containing the modified polyester-based elastomer were obtained in the same manner as the production method of the adhesive polymer composition containing the modified polyester-based elastomer in Example 1-1, except that the formulation shown in Table 1 was used respectively. Laminated bodies were produced using each pellet in the same manner, and each was measured. The results are shown in Table 1.

Table 1 shows the polyalkylene ether glycol segment content and titanium content of the polyester-based elastomer used to produce the modified polyester-based elastomer, as well as the polyalkylene ether glycol segment content, titanium content, acid value, melt flow rate, density, melting point, hardness, and acid modification rate of the modified polyester-based elastomer.

<Table 1 >

| | | | | | Example 1-1 | Example 1-2 | Example 1-3 | Example 1-4 | Example 1-5 | Example 1-6 | Comparative Example 1-1 | Comparative Example 1-2 | Comparative Example 1-3 |
|---|---|---|---|---|---|---|---|---|---|---|---|---|---|
| Adhesive polymer composition (adhesive layer material) formulation | Modified polyester-based elastomer | Polyester-based elastomer | Component (A) | A-1 | 100 | | | 83 | 72 | 53 | | | |
| | | | | A-2 | | 100 | | | | | | | |
| | | | | A-3 | | | 100 | | | | | | |
| | | | | A-4 | | | | | | | 100 | | |
| | | | | A-5 | | | | 17 | 28 | 47 | | 100 | |
| | | | | A-6 | | | | | | | | | 100 |
| | | | Titanium content | wtppm | 150 | 83 | 160 | 181 | 200 | 235 | 250 | 330 | 260 |
| | | | Polyalkylene ether glycol segment content | % by mass | 73 | 64 | 61 | 73 | 74 | 74 | 64 | 75 | 58 |
| | | | Acid value | eq /T | 19 | 17 | 30 | 22 | 23 | 26 | 33 | 35 | 9 |
| | | Maleic anhydride | Component (B) (parts by mass) | B | 0.5 | 0.5 | 0.5 | 0.5 | 0.5 | 0.5 | 0.5 | 0.5 | 0.5 |
| | | Radical generator | Component (C) (parts by mass) | C | 0.1 | 0.1 | 0.1 | 0.1 | 0.1 | 0.1 | 0.1 | 0.1 | 0.1 |
| | Additive | Antiblocking agent | Component (X) (parts by mass) | X | 0.1 | 0.1 | - | 0.1 | 0.1 | 0.1 | 0.1 | 0.1 | - |
| Polyalkylene ether glycol segment content in modified polyester-based elastomer | | | | % by mass | 74 | 64 | 59 | - | - | - | - | - | - |
| Titanium content | | | | wtppm | 110 | 120 | 160 | 140 | 160 | 200 | 260 | 300 | 300 |
| Acid value | | | | eq/T | 63.5 | 61.2 | 92.5 | 67 | - | 55 | 80.2 | 71.7 | 105.4 |
| Melt flow rate (230°C, 2. 16kg) | | | | g/10 min | 18 | 24 | 26 | 18 | 18 | 22 | 32 | 34 | 34 |

EP 4 491 654 A1

22

(continued)

| | | Example 1-1 | Example 1-2 | Example 1-3 | Example 1-4 | Example 1-5 | Example 1-6 | Comparative Example 1-1 | Comparative Example 1-2 | Comparative Example 1-3 |
|---|---|---|---|---|---|---|---|---|---|---|
| Density | g/cm³ | 1.07 | 1.10 | 1.10 | - | - | - | 1.09 | 1.06 | 1.12 |
| Melting point | °C | 160 | 186 | 161 | - | - | - | 185 | 147 | 165 |
| Hardness | - | 24 | 31 | 38 | - | - | - | 31 | 22 | 33 |
| Acid modification rate | - | 0.28 | 0.22 | 0.30 | 0.16 | 0.16 | 0.15 | 0.20 | 0.25 | 0.25 |
| Adhesive strength (PA6) — Initial adhesive strength | N/15mm | 13 | 15 | 16 | 14 | 13 | 14 | 15 | 14 | 17 |
| Adhesive strength (PA6) — Heat-resistant adhesive strength | N/15mm | 18 | 13 | 14 | 15 | 15 | 14 | 11 | 10 | 11 |
| Adhesive strength (PA6) — Retention rate | % | 138 | 87 | 88 | 107 | 115 | 100 | 73 | 71 | 68 |

The "-" in the column for polyalkylene ether glycol segment content in modified polyester-based elastomer means that there is no measured value.

EP 4 491 654 A1

Table 1 shows that Examples 1-1 to 1-6, which used modified polyester-based elastomers of the present invention having a titanium content of less than 250 wt ppm, exhibit high heat-resistant adhesion property (retention rate) to the polyamide layer.

In contrast, Comparative Examples 1-1 to 1-3, which used modified polyester-based elastomers having a titanium content of 250 wt ppm or more, exhibit poor heat-resistant adhesion property.

In Table 1, the adhesiveness retention rate exceeds 100% in some Examples. This is due to the fact that the reaction was accelerated by the application of heat during the heat resistance test, resulting in improved adhesiveness.

[Example 2-1]

<Production of modified ethylene-vinyl alcohol-based copolymer (EVOH) composition and production of test piece>

20 parts by mass of pellets of adhesive polymer composition containing modified polyester-based elastomer obtained in Example 1-1 and 80 parts by mass of ethylene-vinyl alcohol-based copolymer (EVOH) "Soarnol (registered trademark) DC3203RB" manufactured by Mitsubishi Chemical Corporation were dry blended and mixed, and kneaded and molded at a set temperature of 230°C using a multipurpose small molding machine (Micro 15cc Twin Screw Compounder manufactured by Rheo Lab Co., Ltd.) to obtain a test piece for measuring Izod impact strength and flexural modulus having a thickness of 4 mm, width of 10 mm, and length of 80 mm. Then, a notch was made in the test piece for measuring Izod impact strength using a notching tool (for notch dimensions, refer to JIS K7110). The flexural modulus and Izod impact strength of the obtained test piece were measured.

The above measurement results are shown in Table 2.

[Example 3-1]

<Production of modified polyamide-based polymer (PA) composition>

5 parts by mass of pellets of adhesive polymer composition containing modified polyester-based elastomer obtained in Example 1-1 and 95 parts by mass of polyamide (PA6) "Novamid (registered trademark) 1020" manufactured by DSM Japan Engineering Plastics K.K. were dry blended and mixed, and melt-kneaded using a twin-screw extruder (manufactured by Ikegai Corp. PCM30, D = 30 mm φ, L/D = 30) at a set temperature of 180 to 240 ° C, a screw rotation speed of 200 rpm, and an extrusion rate of 10 kg / h, and pellets were obtained by strand cutting.

<Production of modified polyamide-based polymer (PA) composition test pieces>

The modified polyamide-based polymer (PA) composition obtained above was kneaded and molded using an injection molding machine (manufactured by Toshiba Machine Co., Ltd., IS130GN-5A) at an injection temperature of 260°C and a mold temperature of 80°C to produce test pieces in the same manner as in Example 2-1. The obtained test pieces were measured for flexural modulus and Izod impact strength.

The above measurement results are shown in Table 2.

[Example 2-2, Comparative Examples 2-1 to 2-3]

Test pieces of the modified ethylene-vinyl alcohol-based copolymer composition were obtained in the same manner as the production of the modified ethylene-vinyl alcohol-based copolymer (EVOH) composition in Example 2-1, except that the formulation shown in Table 2 was used, and measurements were performed on each. The results are shown in Table 2.

[Comparative Examples 3-1 to 3-2]

Test pieces of the modified polyamide-based polymer (PA) composition were obtained in the same manner as the production of the modified polyamide-based polymer (PA) composition in Example 3-1, except that the formulation shown in Table 2 was used, and measurements were performed on each. The results are shown in Table 2.

Table 2 also lists the color tone (pellet YI) measured for each modified polyester-based elastomer.

[Table 2]

<Table 2>

| Blended amount | | Unit | Example 2-1 | Example 2-2 | Example 2-3 | Comparative Example 2-1 | Comparative Example 2-2 | Comparative Example 2-3 | Comparative Example 2-4 | Comparative Example 2-5 |
|---|---|---|---|---|---|---|---|---|---|---|
| Ethylene-vinyl alcohol-based copolymer (EVOH) | | Parts by mass | 80 | | 80 | 80 | | 80 | 100 | |
| Polyamide (PA6) | | Parts by mass | | 95 | | | 95 | | | 100 |
| Modified polyester-based elastomer | Example 1-1 | Parts by mass | 20 | 5 | | | | | | |
| | Example 1-3 | Parts by mass | | | 20 | | | | | |
| | Comparative Example 1-2 | Parts by mass | | | | 20 | 5 | | | |
| | Comparative Example 1-3 | Parts by mass | | | | | | 20 | | |
| Color tone (pellet YI) | | - | 8 | 8 | 12 | 15 | 15 | 16 | - | - |
| Flexural modulus | | MPa | 2925 | - | 3077 | 3007 | - | 3058 | 4256 | - |
| Izod impact strength | 23°C | KJ/m² | 16 | 12 | 17 | 16 | 13 | 17 | 3 | 6 |
| | 0°C | KJ/m² | 18 | 7 | 17 | 17 | 6 | 16 | 5 | 5 |
| | -30°C | KJ/m² | 17 | 6 | 15 | 15 | 6 | 14 | 4 | 5 |
| | -50°C | KJ/m² | 15 | 6 | 13 | 15 | 4 | 10 | 3 | 5 |

Table 2 shows that the modified ethylene-vinyl alcohol-based copolymer (EVOH) compositions of Examples 2-1 to 2, which contain the modified polyester-based elastomer of the present invention having a titanium content of less than 250 wt ppm, have improved flexibility compared to Comparative Example 2-3, which does not contain the modified polyester-based elastomer. In addition, the modified polyamide-based polymer (PA) composition of Example 3-1, which contains a modified polyester-based elastomer of the present invention having a titanium content of less than 250 wt ppm, has improved flexibility compared to Comparative Example 3-2, which does not contain a modified polyester-based elastomer.

In contrast, the modified ethylene-vinyl alcohol-based copolymer (EVOH) compositions of Comparative Examples 2-1 to 2-2 and the modified polyamide-based polymer (PA) composition of Comparative Example 3-1, which contain a modified polyester-based elastomer having a titanium content of 250 wt ppm or more, have improved flexibility, but the color tone of the modified ethylene-vinyl alcohol-based copolymer composition and the modified polyamide-based polymer (PA) composition is considered to be inferior because the color tone of the modified polyester-based elastomer is inferior to that of Examples 2-1 and 2 and Example 3-1.

Although the present invention has been described in detail with reference to particular embodiments, it will be apparent to those skilled in the art that various changes may be made thereto without departing from the spirit and scope of the present invention.

The present application is based on Japanese Patent Application No. 2022-038261 filed on March 11, 2022 and Japanese Patent Application No. 2022-099720 filed on June 21, 2022, which are herein incorporated in their entirety by reference.

**Claims**

1. A modified polyester-based elastomer obtained by modifying a polyester polyether block copolymer consisting of a hard segment containing an aromatic polyester and a soft segment containing a polyalkylene ether glycol with an unsaturated carboxylic acid and/or a derivative thereof,
   wherein the modified polyester-based elastomer contains titanium and has a titanium content of less than 250 wt ppm.

2. The modified polyester-based elastomer according to claim 1, wherein a content of the polyalkylene ether glycol segment in the polyester polyether block copolymer is 5 to 90 % by mass.

3. The modified polyester-based elastomer according to claim 1 or 2, wherein an MFR (according to JIS K7210, 230°C, 2.16 kg load) of the modified polyester-based elastomer is 1 to 300 g/10 min.

4. The modified polyester-based elastomer according to claim 1 or 2, wherein a density (according to JIS K7112) of the modified polyester-based elastomer is 1.00 to 1.35 g/cm$^3$.

5. The modified polyester-based elastomer according to claim 1 or 2, wherein a melting point of the modified polyester-based elastomer is 145 to 245°C.

6. The modified polyester-based elastomer according to claim 1 or 2, wherein a JIS-D hardness (according to JIS K6253) of the modified polyester-based elastomer is 10 to 80.

7. The modified polyester-based elastomer according to claim 1 or 2, wherein the titanium content of the modified polyester-based elastomer is 20 wt ppm or more.

8. The modified polyester-based elastomer according to claim 7, wherein the titanium content of the modified polyester-based elastomer is 20 wt ppm or more and 248 wt ppm or less.

9. A laminated body comprising: a base layer; a layer made of the modified polyester-based elastomer according to claim 1 or 2 or an adhesive polymer composition containing the modified polyester-based elastomer; and a resin layer.

10. A method for producing a modified polyester-based elastomer comprising a step of modifying a polyester-based elastomer polymerized in the presence of a titanium compound with an unsaturated carboxylic acid and/or a derivative thereof,

    wherein the polyester-based elastomer is a polyester polyether block copolymer consisting of a hard segment containing an aromatic polyester and a soft segment containing a polyalkylene ether glycol, and

a titanium content in the polyester-based elastomer is less than 250 wt ppm.

11. The method for producing a modified polyester-based elastomer according to claim 10, wherein a content of the polyalkylene ether glycol segment in the polyester polyether block copolymer is 5 to 90 % by mass.

12. The method for producing a modified polyester-based elastomer according to claim 10 or 11, wherein an acid value of the polyester-based elastomer is 32 eq/T or less.

13. The method for producing a modified polyester-based elastomer according to claim 10 or 11, wherein the modification is carried out in the presence of a radical generator.

14. The method for producing a modified polyester-based elastomer according to claim 13, wherein a blending ratio of the radical generator is 0.001 to 5 parts by mass based on 100 parts by mass of the polyester-based elastomer.

15. The method for producing a modified polyester-based elastomer according to claim 10 or 11, wherein the modification is carried out by a melt-kneading reaction.

16. A modifier comprising the modified polyester-based elastomer according to claim 1 or 2.

17. A polar polymer composition comprising a polar polymer and the modified polyester-based elastomer according to claim 1 or 2, wherein a content of the polar polymer is 70 to 99 % by mass, and the modified polyester-based elastomer is 1 to 30 % by mass based on a total of the polar polymer and the modified polyester-based elastomer, and the polar polymer comprises at least one selected from an ethylene-vinyl alcohol-based copolymer and a polyamide-based polymer.

**INTERNATIONAL SEARCH REPORT**

| International application No. |
| --- |
| **PCT/JP2023/009272** |

**A. CLASSIFICATION OF SUBJECT MATTER**

*C08G 64/42*(2006.01)i; *B32B 27/36*(2006.01)i; *C08G 63/668*(2006.01)i; *C08G 63/91*(2006.01)i
FI: C08G64/42; C08G63/668; B32B27/36; C08G63/91

According to International Patent Classification (IPC) or to both national classification and IPC

**B. FIELDS SEARCHED**

Minimum documentation searched (classification system followed by classification symbols)

C08G64/42; B32B27/36; C08G63/668; C08G63/91

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2004-1252 A (MITSUBISHI CHEMICAL CORP.) 08 January 2004 (2004-01-08)<br>claims, examples | 1-17 |
| Y | JP 2019-143071 A (MCPP INNOVATION LLC) 29 August 2019 (2019-08-29)<br>claims, examples | 1-17 |
| Y | JP 2003-40994 A (TOYO BOSEKI KABUSHIKI KAISHA) 13 February 2003 (2003-02-13)<br>claims, paragraphs [0001], [0019], examples | 1-17 |
| Y | JP 8-283545 A (TORAY INDUSTRIES, INC.) 29 October 1996 (1996-10-29)<br>claims, paragraphs [0008], [0010], examples, in particular, example 6, comparative example 5 | 1-17 |
| Y | JP 2004-124087 A (MITSUBISHI CHEMICAL CORP.) 22 April 2004 (2004-04-22)<br>claims, paragraphs [0010], [0038], examples, in particular, paragraph [0051] | 1-17 |

☐ Further documents are listed in the continuation of Box C. ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **25 April 2023** | **16 May 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/009272**

| Patent document cited in search report | | | Publication date (day/month/year) | Patent family member(s) | Publication date (day/month/year) |
|---|---|---|---|---|---|
| JP | 2004-1252 | A | 08 January 2004 | (Family: none) | |
| JP | 2019-143071 | A | 29 August 2019 | (Family: none) | |
| JP | 2003-40994 | A | 13 February 2003 | (Family: none) | |
| JP | 8-283545 | A | 29 October 1996 | (Family: none) | |
| JP | 2004-124087 | A | 22 April 2004 | (Family: none) | |

Form PCT/ISA/210 (patent family annex) (January 2015)

**REFERENCES CITED IN THE DESCRIPTION**

**Patent documents cited in the description**

- JP 2002155135 A
- JP 2004002791 A
- JP 2022038261 A
- JP 2022099720 A